# EUROPEAN PATENT APPLICATION

(11) **EP 4 664 347 A1**
(43) Date of publication of application: **17.12.2025**
(21) Application number: 24182335.0
(22) Date of filing: 14.06.2024
(51) Int. Cl.: G06F 40/284, G06F 40/30

(54) **METHOD, DEVICE AND SYSTEM AND COMPUTER PROGRAM FOR DERIVING A LANGUAGE AGNOSTIC REPRESENTATION**

(71) Applicant: Aleph Alpha GmbH, 69115 Heidelberg (DE)
(72) Inventor: WEINBACH, Samuel, 69123 Heidelberg (DE); DEISEROTH, Björn, 69123 Heidelberg (DE)
(74) Representative: Bardehle Pagenberg Partnerschaft mbB Patentanwälte Rechtsanwälte

(57) **Abstract**

A computer-implemented method for deriving a language agnostic representation for each word of a text, the method comprising: splitting the text into a plurality of words; tokenizing the plurality of words to obtain a plurality of tokens; calculating a token identification number for each token; hashing each token identification number to obtain a plurality of embedded tokens identification numbers; aggregating one or more embedded token identification numbers to obtain the language agnostic representation for each word. The invention also relates to a computer-implemented method for training a machine learning model, a computer-implemented method for generating text, a corresponding device or system and a corresponding computer program.

## Description

### Technical field

The present invention relates to a computer-implemented method for deriving a language agnostic representation for each word of a text as well as a computer-implemented method for training a machine learning model based on the derived language agnostic representations and a computer-implemented method for generating text based on the trained machine learning model. The present invention also relates to corresponding devices and/or systems and computer programs.

### Technical background

Machine learning has been transformative across different industries, from healthcare to automotive, by introducing predictive models and decision-making system into everyday life. In healthcare, for instance, machine learning algorithms can analyze medical images and patient data to diagnose diseases with remarkable accuracy, often surpassing human experts. This technology not only accelerates diagnosis but also personalizes treatment plans, leading to better patient outcomes. In the automotive industry, machine learning models are for example used to enhance safety through driver assistance system such as adaptive cruise control and automatic emergency braking.

Large language models (LLMs) are advanced applications of machine learning that can understand and generate human language with a high degree of accuracy. These models are trained on vast amounts of text information which allows them to perform diverse language tasks such as translation and conversation. Most current large language model use the transformer architecture which leverages the so-called attention mechanisms to process entire sequences of data simultaneously. This captures the contextual relationships between words more effectively than previous models like Recurrent Neural Networks (RNNs) or Long-Short Term Memory Neural Networks (LSTMs). This approach not only improves the efficiency of processing but also increases understanding of long-range dependencies in text.

A crucial element dictating the performance of large language models is the representation of the text information, which is also referred to as embedding. The embedding process comprises the transformation of text information into numerical vectors. To start the actual embedding, the text information needs to be broken down into smaller units (i.e., tokens) such as words, subwords or other meaningful elements which may be referred to as tokenization. Subsequently, the numerical vectors are generated based on the created token. The generated numerical vectors (i.e., representations of text information) capture among others semantic meaning and context, between words that are present in the text information. The embedding enables the large language model to further process the text information.

The fundamental building blocks of tokenization and embedding have remained largely unchanged since the beginning of the practice. Conventional methods such as the Byte-Pair Encoding tokenizer (BPE) work by building a tokenizer by populating a fixed-size vocabulary based on statistical frequencies in a reference corpus. Subsequently, an embedding matrix is trained to learn a representation for each token in the vocabulary. While current advances in the field have all taken place using those conventional methods, there are several weaknesses that require improvement.

First, conventional tokenizer are commonly machine learning models that require to be trained which uses up additional computing resources. This is particularly disadvantageous when it comes to natural language applications which usually require a large amount of data. Thus, depending on the size of the training data a large amount of computational resources are required to train a conventional tokenizer. Moreover, errors in this stage such as poor design choices adversely impact the performance of the actual large language model. Further, since the tokenizer is trained on one training set, that tokenizer will be optimized for exactly this training set. Assuming that a tokenizer is trained on a training set that contains text information in English, this tokenizer and further downstream the large language model shows a significant drop in performance when working with different languages such as French or German. This disadvantage applies to underrepresented language. Also, conventional tokenizers poorly utilize the resulting vocabulary with a significant percentage of tokes being near duplicates that contain low information. Accordingly, the vocabulary size that is created using conventional tokenizers is rather large. This as an adverse effect on the required memory and computational resources during training and inference.

In view of these disadvantages, the presently known embedding techniques may not always lead to the desired results. There is thus a need to improve the presently used embedding techniques. An object of the present invention is thus to address one or more or all of the above-mentioned disadvantages.

### Summary of the invention

The above-mentioned objects and other objects, which become apparent from the following description, are solved by the subject-matter of the independent claims. Preferred embodiments are subject of the dependent claims.

A 1^{st} embodiment of the invention is directed to a computer-implemented method for deriving a language agnostic representation for each word of a text, the method comprising: splitting the text into a plurality of words; tokenizing the plurality of words to obtain a plurality of tokens; calculating a token identification number for each token; hashing each token identification number to obtain a plurality of embedded tokens identification numbers; aggregating one or more embedded token identification numbers to obtain the language agnostic representation for each word.

Splitting the text into a plurality of words may have the advantage of improving further processing of the text information. For example, words are the building blocks of sentences which carry contextual meaning and thus, further processing on the more granular word level may incorporate the contextual meaning more effectively. Note that the text may not be limited to text of natural language. Text may also refer to sequential data more generally such as programing language (e.g., Python and C), mathematical equations and/or byte level information. Tokenizing the plurality of words to obtain a plurality of tokens may additionally improve further processing of the text information. More specifically, tokenization may enable normalization of the text information and customizing the splitting to specific linguistic requirements. Calculating a token identification number for each token may enable further efficient processing. The token identification number may be calculated by taken the Unicode representation of each character, multiplying it with 256 to the power of the position of the character and adding the results.

Hashing each token identification number to obtain a plurality of embedded tokens identification numbers may enable the explicit modeling of synergies between tokens, and further may have the advantage of reducing the total required embedded token identification numbers, which may also be referred to as vocabulary. Additionally, hashing may lead to a smaller vocabulary size which may save computational resources during further use of the language agnostic representations such as the training and use of a machine learning model. Hashing may also have the advantage of being static. In other words, the embedded token identification numbers may be precomputed. This may have the advantage of saving computational resources since the hashing of a specific token identification number may only have to be performed once. If a hashing of the specific token identification number is required again, the precomputed result may be used. A further advantage may be that the hashing operation itself is computationally efficient.

Aggregating one or more embedded token identification numbers to obtain the language agnostic representation for each word may decrease the size of the vocabulary. A smaller vocabulary size may save computational resources during further use of the language agnostic representations such as the training and use of a machine learning model. A smaller vocabulary size may be especially beneficial during the training phase of a machine learning model which may be reduced significantly and thus lead to significant savings of memory and computational resources. A further advantage of aggregating one or more embedded token identification numbers may be an improved quality of the language agnostic representation. In other words, aggregation may be able to create a language agnostic representation that better represents the underlying text. This may be due to explicitly modeled synergies of hash, otherwise trained redundancies such as uppercase variations may be reduced by sharing embedded token identification numbers among similar tokens and therefore words.

An additional advantage compared to conventional methods may be that the language agnostic representation is not trained to fit a specific corpus. Accordingly, the resulting language agnostic representations may be better suited to train machine learning models that are unrelated / show little relation to the specific corpus that was used to create the representations and/or not widely used/recorded languages such as gaelic. Due to the reduction into a single language agnostic representation per word, the total number of representations per text may be reduced, which in turn is more resource efficient, in particular with the related machine learning model.

According to a 2^{nd} embodiment, the tokenizing step comprises: deriving, for each of the plurality of words, one or more n-grams; wherein each n-gram corresponds to a token of the plurality of tokens.

Deriving, for each of the plurality of words, one or more n-grams, wherein each n-gram corresponding to a token of the plurality of tokens may have the advantage of improving tokenization. Moreover, n-grams may be able to capture the local context which may be specifically useful for understanding phrases and/or common word combinations. A further advantage of using n-grams may be their ability to capture short-term dependencies between words which may improve syntactic and semantic understanding of text. A further advantage of n-grams may be the ability to explicitly model and share similarities between words, and as such reducing redundancies in representations and therefore reducing training complexity of the language model. They may further be adapted depending on specific use-cases.

According to a 3^{rd} embodiment, each n-gram is a sequence of n bytes, wherein preferably each byte corresponds to a symbol that is present in the text information, wherein most preferably the sequence corresponds to n consecutive symbols that are present in the text information.

Each n-gram being a sequence of n bytes and each byte corresponding to a symbol that is present in the text information may have the advantage of tokenizing the text information in a structured manner. Using byte sizes may improve computational efficiency and may be in accordance with standard representation of symbols in a text. Having the sequence correspond to n consecutive symbols that are present in the text information may have the advantage of incorporating contextual information into the tokenization. Such contextual information may further improve the language agnostic representation.

According to a 4^{th} embodiment, the *n* is equal to an integer between 5 and 1, preferably between 4 and 2, most preferably 3.

The n being equal to an integer between 5 and 1, preferably between 4 and 2, most preferably 3 may have the advantage of improving the generated representation. More specifically, n-grams of the above-mentioned integer size may contain a meaningful entropy information. Such entropy information may contain information about the neighborhood of the n-gram. Accordingly, the meaningful entropy information may improve reassembling the original text information from the set of n-grams.

According to a 5^{th} embodiment, the splitting step is performed at one or more of: a whitespace; a digit; a special character.

Performing the splitting step at a whitespace may have the advantage of splitting a text into meaningful parts. Words are usually separated by white spaces, accordingly, splitting at white spaces may be advantageous when splitting a text into its part. To accurately incorporate special characters and digits into the further analysis, it may also be advantageous to split at digits and/or special characters. For example, "Hello word!" may be split into "Hello", "word" and "!". The words "Hello" and "word" are split due to the whitespace-rule and the part "word!" is split into "word" and "!" due to the special character-rule. Further, a special "whitespace" and "non-whitespace" token may be added. These special tokens may allow modelling of cases where substrings should not be concatenated with whitespace, e.g., single digits of larger numbers. Such splitting may accurately incorporate the semantic meaning of the text.

Further advantages of such rule-based splitting may increase flexibility such as the ability to add and remove rules. For example, if it is discovered that a different type of rule leads to better results, this rule may be added to the set of rules that governs the splitting process. Moreover, the described rule-based splitting may also increase the interpretability of the splitting process.

According to a 6^{th} embodiment, the hashing step comprises: hashing each token identification number using a hashing algorithm; or training a machine learning model; and hashing, using the trained machine learning model, each token identification number.

Hashing each token identification number using a hashing algorithm may have the advantage of simplifying the hashing step and may save computational resources during the hashing step. Moreover, a hashing algorithm may be applied to a large amount of information which may be especially beneficial in the context of machine learning which requires a large amount of data. Additional, hashing algorithm may be suitable for leveraging overlaps between token which may improve performance.

Training a machine learning model and hashing, using the trained machine learning model, each token identification number may improve the hashing step. The improvement may result from the customization of the hashing step to the specific training set that the machine learning model is trained on. The trained machine learning model may thus identify intricate patterns that improve the hashing and make it more efficient.

According to a 7^{th} embodiment, the one or more embedded token identification numbers correspond to the same word of the plurality of words.

The one or more hashed token identification numbers corresponding to the same word of the plurality of words may have the advantage of improving the language agnostic representation. More specifically, aggregating hashed token identification numbers that correspond to the same word of the plurality of words may have the advantage of decreasing the size of the vocabulary. This may save computational resources, for example during training and during inference. A further advantage may be a language agnostic representation containing a higher level of information. For example, a first hashed token identification number may represent the trigram *"Hel"* and a second hashed token identification number may represent the trigram "*hel*", which both stem from the word *"Hello".* Since the meaning of the word does not significantly change based on capitalization (i.e., *"hello"* and *"Hello"* have almost the same meaning), maintaining two different trigrams may not be required. Thus, aggregating the representation of both trigrams may decrease the vocabulary size and increase the level of information that is represented in the remaining trigram.

According to an 8^{th} embodiment, the aggregating step comprises: aggregating one or more embedded token identification numbers to obtain one or more aggregated embedded token identification numbers; and aggregating the one or more aggregated embedded token identification numbers to obtain the language agnostic representation for each word.

Aggregating one or more embedded token identification numbers to obtain one or more aggregated hashed token identification numbers may have the advantage of decreasing the vocabulary size and thus saving computational resources. A further advantage may be an improved language agnostic representation.

Aggregating the one or more aggregated hashed token identification numbers to obtain the language agnostic representation for each word may have the advantage of further improving the language agnostic representation and required computational efforts. This may in particular be the result of the "divide and conquer" principle, by aggregating blocks of information as they arrive into larger blocks of information.

According to a 9^{th} embodiment, the aggregating step comprises: aggregating the one or more hashed token identification numbers by calculating the mean of the one or more hashed token identification numbers; and/or aggregating the one or more hashed token identification numbers by calculating the sum of the one or more hashed token identification numbers.

Aggregating the one or more hashed token identification numbers by calculating the mean of the one or more hashed token identification numbers may improve the language agnostic representation. Further, calculating the mean may be computationally efficient and thus save computational resources. Moreover, using the mean to aggregate the one or more hashed token identification number may improve the quality of the language agnostic representation.

Aggregating the one or more hashed token identification numbers by calculating the sum of the one or more hashed token identification numbers may improve the language agnostic representation. Further, calculating the sum may be computationally efficient and thus save computational resources. Moreover, using the sum to aggregate the one or more hashed token identification number may improve the quality of the language agnostic representation.

A 10^{th} embodiment of the invention is directed to computer-implemented method for training a machine learning model, the method comprising: deriving a language agnostic representation of text information according to the method of any one of the preceding embodiments; and training the machine learning model based on the language agnostic representation.

Deriving a language agnostic representation of text information according to the method of any one of the preceding embodiments; and training the machine learning model based on the language agnostic representation may improve the performance of the machine learning model. Accordingly, the machine learning model may be trained to achieve a higher performance when using the language agnostic representation derived according to the method of any one of the preceding embodiments as compared to using representations derived according to conventional methods. A further advantage, which may lead to the increase in performance, may be that the language agnostic representation is not trained to fit a specific corpus and thus may be better suited to train machine learning models that are unrelated or show little relation to the specific corpus that was used to create the representations.

According to an 11^{th} embodiment, the machine learning model is trained using a multi-label binary cross entropy loss function.

Using a multi-label binary cross entropy loss function to train the machine learning model has the advantage of incorporating more than one objective into the training process. While conventional methods usually focus on one objective, the proposed invention incorporates multiple objectives. The incorporation of multiple objectives may be enabled through the multilabel cross entropy loss function. Moreover, the incorporation of multiple objectives may improve the results of the training process and may increase the performance of the trained machine learning model. It may also allow for a more semantically robust encoding. This may particularly be the case for words with similar word-stems.

According to a 12^{th} embodiment, the machine learning model is a neural network, preferably based on an encoder-decoder architecture, most preferably based on a transformer architecture.

The machine learning model being a neural network, preferably based on an encoder-decoder architecture, most preferably based on a transformer architecture may have the advantage of improving the results of the machine learning model. This may be due to the efficacy of the above-mentioned architectures to sequential information. More specifically, the improvement may be due to the suitability of the language agnostic representations to the above-mentioned architectures.

A 13^{th} embodiment of the invention is directed to a computer-implemented method for generating text based on a prefix, the method comprising: inputting the prefix into a machine learning model trained according to the method of any one of embodiments 10 to 12; generating, using the trained machine learning model, text.

Inputting the prefix into a machine learning model trained according to the method of any one of embodiments 10 to 12 and generating, using the trained machine learning model, text may improve the results of the trained machine learning model. In other words, the generated text may be of a higher quality as text that is generated using conventional methods. This may be due to the increase in performance of the machine learning model that was trained using the language agnostic representations that were generated according to any one of the embodiments 1 to 9. As discussed in relation to embodiment 10, the increase in performance may be due to the advantageous effect of not training the language agnostic representation to fit to a specific corpus. In addition, the trained machine learning model may include an incremental expansion of a dictionary map.

According to a further embodiment, the machine learning model uses multi-label prediction to generate the text.

Using multi-label prediction to generate the text may have the advantage of increasing the accuracy of the generated text. In addition, multi-label prediction may enable the machine learning to generate text that is semantically robust. This may particularly be the case for words with similar word-stems.

A 14^{th} embodiment of the invention is directed to a device or system comprising means to implement the method according to any one of embodiments 1 to 9 or embodiments 10 to 12 or embodiment 13.

The advantages that were mentioned with regards to any one of the previous embodiments apply likewise to embodiment 14. Further advantages may be applicable.

A 15^{th} embodiment of the invention is directed to a computer program comprising instructions which, when the program is executed by a computer, cause the computer to carry out the method of any of embodiments 1 to 9 or embodiments 10 to 12 or embodiment 13.

The advantages that were mentioned with regards to embodiments 1 to 13 apply likewise to embodiment 15. Further advantages may be applicable.

### Brief description of the figures

Various aspects of the present invention are described in more detail in the following by reference to the accompanying figures without the present invention being limited to the embodiments of these figures.
- Fig. 1: illustrates an embedding process according to an embodiment of the present invention;
- Fig. 2: illustrates a decoding process according to an embodiment of the present invention;
- Fig. 3: illustrates an embedding process according to a conventional method;
- Fig. 4: illustrates a decoding process according to a conventional method;
- Fig. 5: illustrates difference in memory usage between a conventional method and a method according to an embodiment of the present invention;
- Fig. 6: illustrates the performance advantages between conventional methods and a method according to an embodiment of the present invention.

### Detailed description of preferred embodiments

In the following, the invention is described with reference to the accompanying figures in more detail. However, the present invention can also be used in other embodiments not explicitly disclosed hereafter. As detailed below, the embodiments are compatible with each other, and individual features of one embodiment may also be applied to another embodiment.

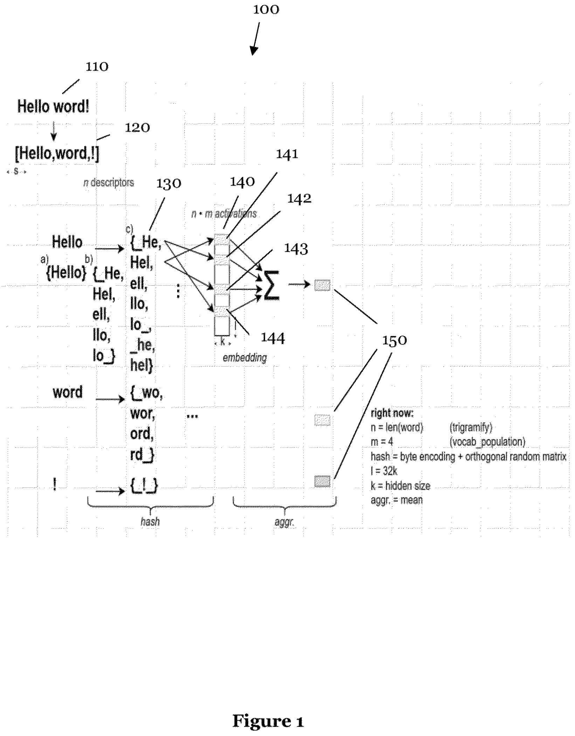

Figure 1 shows an exemplary embedding process 100 according to an embodiment of the present invention that converts text information 110 into a language agnostic representation 150. In this case, the text information 110 is the phrase "Hello word!" and the language agnostic representation 150 are represented as three rectangles located at the right side of the schematic. Note that in this case, each word 120 (i.e., "Hello", "word", "!") receives one language agnostic representation (i.e., first rectangle, second rectangle, third rectangle).

The depicted embedding process 100 may be separated in several steps.

First, during the splitting step, the text information 110 may be split into words 120 as shown in the upper left corner of Figure 1. Note that the s represents the total number of words. The splitting may be performed at whitespaces, special characters and or numbers. For example, the text information "hello word" may be split using the whitespaces rule which results into a splitting of "hello word" into the words "hello" and "word". An example for the technique of splitting at a special character may be splitting the text information "word!" into the words "word" and "!". Note that even though there is no whitespace between "word" and "!", using the special character splitting method may still allow for the recognition of two separate words. Splitting the text information at numbers follows a similar logic. In addition, a specific token representing a whitespace may be incorporated. The splitting may have the advantage of dividing the text information in such a manner that enables efficient further processing. Moreover, rule-based splitting as presented in Figure 1 may provide a higher level of flexibility and interpretability.

Second, during the tokenization step, each word may be further split into meaningful parts which may be referred to as token or descriptor 130. The total number of token or descriptors a word is split into may be denoted as n, n may usually be equal to the length of a word. The example of Figure 1 shows three different manners in which the word "Hello" may be tokenized. The first variation (a) shows that the word "Hello" was not split at all during tokenization, but remained "Hello", the second variation (b) shows that the word "Hello" was split into the token "_He", "Hel", "ell", "llo" and "lo_" and the third variation (c) shows that the word "Hello" was split into the token "_He", "Hel", "ell", "llo", "lo_", "_he" and "hel". In contrast to the first variation and the second variation, the third variation may have the advantage of including a lowercased version of the word "Hello". This may enable sensitivity towards capitalization and remove redundancies during the training process. While the first variation may be interpreted as a 5-gram of the word "Hello", or tokenization at a word-granularity, the second and the third variation may be regarded as including all 3-grams (i.e., trigrams) of the word "Hello". Using n-grams and specifically trigrams may improve the results of the embedding process 100. Moreover, trigrams may have the advantage of containing a meaningful entropy such that reassembling of a word based on the set of trigrams that the word is made up of is possible. Trigrams may also be computationally efficient since there are "only" 256³, which amounts to roughly 16.7 million, possible combinations and thus 16.7 million combinations to work with. A general advantage may be that the mapping from word to language agnostic representation is static and may be precomputed for all n-grams. Although not shown in Figure 1, each token (i.e., "_He", "Hel", "ello", etc.) is given a token identification number which is required for the next step.

Third, during the hashing step, each token identification number may be mapped (i.e., hashed) to one or more embedding vector 140 of size *k.* The total number of embedding vectors that a token identification number may be mapped to is represented by m. Note that *l* (i.e., the size of the vocabulary) may be independently chosen as a hyperparameter with words sharing individual entries to better encode similarities. The embedding vectors may contain floating-point numbers. As shown in Figure 1, a token identification number may map to more than one embedding vector 140, in other words, the token may be hashed more than once. This may be the case for the token "_He" which may not only be mapped to its own embedding vector, but which may also be mapped to the embedding vector of the token "_he" and vice versa. This has the advantage of linking tokens with a similar meaning. The hashing may be performed using a standard hashing algorithm such as Message Digest Algorithm 5 (MD5), Secure Hash Algorithm 1 (SHA-1) and SHA-246. The hashing step may further comprise byte encoding and the use of an orthogonal random matrix for dimensionality reduction. The hashing may also be performed using a neural network. In other words, a neural network may be trained to perform the specific hashing function and later be used during inference.

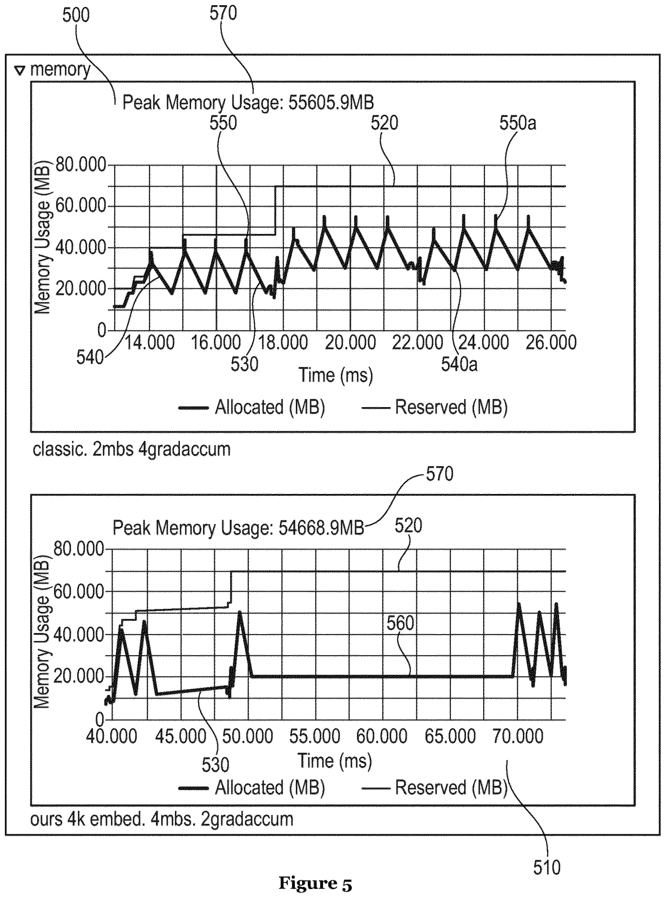

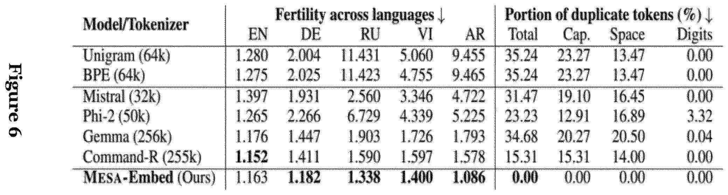

Fourth, during the aggregation step, the embeddings 140 that were created during the hashing step may be aggregated to obtain the language agnostic representation 150. More specifically, as discussed previously, each word 120 (i.e., "Hello", "word", "!") is associated with multiple token (i.e., "_He", "Hel", "ell", etc.) and each token (e.g., "_He") is associated with one or more embeddings 140. During the aggregation step, all embeddings 140 that belong to the same word are aggregated to form the language agnostic representation 150. Figure 1 shows this aggregation for the word "Hello". The hashing and aggregating steps for the words "word" and "!" are only implied with the three dots. However, the result, in other words, the language agnostic representation 150 for the words "word" and "!" are also shown. The aggregation may be performed using the mean of the embeddings or the sum of the embeddings. The aggregation step may reduce memory usage as described in more detail with regards to Figure 5. Aggregating the embeddings associated with the same word may also decrease computational resources during training and/or inference of model. This may be because less memory is required to save and further process the language agnostic representations 150. This is described in further detail with regards to Figures 5 and 6, wherein Figure 6 particularly emphasizes the reduction in the total number of embeddings that may a result of the aggregation.

The aggregation may also be performed in a multi-step process, for example in a two-step process in which the first step comprises aggregating two or more embeddings and the second step comprises the aggregation of the aggregated embeddings. To illustrate this multi-aggregation further, the first step may comprise aggregating embeddings 141 and 142 to generate a first aggregated embedding and then aggregating embedding 143 and 144 to generate a second aggregated embedding. The second step may then comprise aggregating the first and the second aggregated embeddings. Note that this is not shown in Figure 1 but may provide the advantage of further improving the language agnostic representations and reduce computational efforts. Further note that the multi-step aggregation process is not limited to two steps but may comprise more aggregation steps.

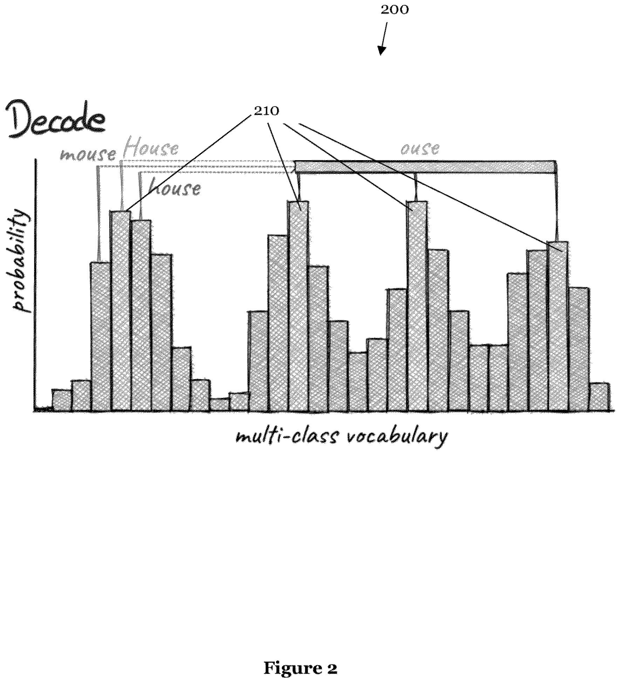

While Figure 1 illustrates the encoding of the text information, in other words, the derivation of the language agnostic representations, Figure 2, focuses on the decoding which describes the generation of text information based on the derived language agnostic representations. More specifically, Figure 2 illustrates that, in contrast to conventional methods which commonly use a single-label binary cross-entropy loss function, the present invention uses a multi-label binary cross-entropy loss function. While multi-label binary cross-entropy and single-label binary cross-entropy are both loss functions used in classification tasks, they cater to different types of problems or in this case address the same problem in a different manner. Multi-label binary cross-entropy may be used for multi-label classification where each instance can belong to one of multiple classes. Single-label binary cross-entropy, on the other hand, is used for single-label binary classification where each instance belongs to only one class. Using a multi-label entropy loss function may have the advantage of improving the inference results by allowing for a more semantically robust encoding.

Figure 2 aims to show this through an exemplary prediction of a next token as illustrated in the graph 200. The x-axis of the graph schematically shows the multi-class vocabulary, wherein the four highlighted bars 210 correspond to the vocabulary term *"House"* and the right-most of the highlighted bars 210 are shared by the vocabulary terms *"mouse", "House",* or *"house".* The y-axis of the graph schematically shows the probability of the respective vocabulary term for being the next token. Note that the potential next token with the highest probability all share the term *"ouse"* and are thus semantically related. This demonstrates a further advantage of the multi-label binary cross-entropy, which may be the avoidance of unrelated concepts appearing among the top predictions. Graph 200 also shows that due to the multi-label binary cross-entropy, multiple classes (i.e., bars) 210 are considered during the training and inference process.

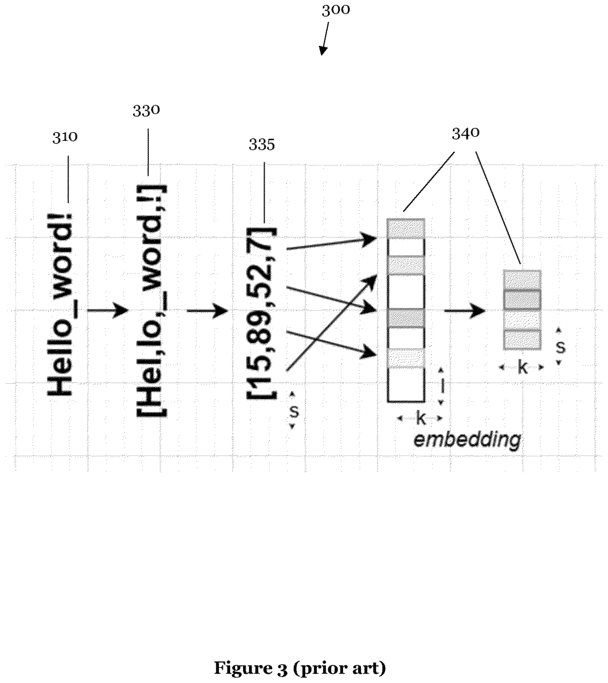

Figure 3 shows a conventional embedding process 300. The process also starts with text information 310 such as the phrase "Hello_word!" and ends with an embedding 340 for each word 320 of the text information 310. Similar to Figure 1, s represents the total number of words, while *k* represents the size of the embedding vector and *l* represents the size of the vocabulary.

This conversion is performed by firstly splitting the text information 310 into token 330. In the example of Figure 3, the text information 310 "Hello_word!" is split into the token "Hel", "lo", "_word" and "!". However, there are no restrictions to the format of a token. The token may span multiple characters or even multiple words. The token may also contain various special characters. Next, each token 330 may be given a numerical representation referred to as a token identification number 335. Figure 3 shows that the token "Hel" receives the token identification number "15" and that the token "lo" receives the token identification number "89" and so on.

The following step may be referred to as the embedding step which may be responsible for converting (i.e., embedding) each token identification number 335 into an embedding vector 340 of floating-point numbers. In the conventional method, the embedding step may be the first layer of a neural network which may also be referred to as the embedding layer. This layer may also be regarded as an embedding matrix of size *k × l* wherein *k* is the size of the embedding vector and *l* is the vocabulary size. In the final step, the embedding matrix is reduced from *k × l* to *k ×* s wherein s is the total number of words and the embeddings are reordered according to the order in which they were inputted.

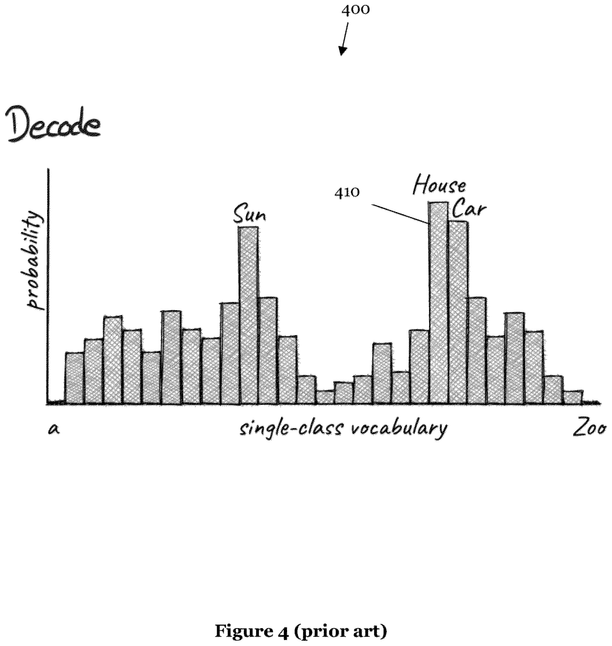

Figure 4 is similar to Figure 2 in that it shows a decoding process, in other words the prediction of the next word. However, unlike Figure 2, Figure 4 demonstrates the decoding process using a conventional method which uses a single-label binary-cross entropy loss function.

This is illustrated in the decoding graph 400. The x-axis of graph 400 shows the single-class vocabulary wherein one bar represents one vocabulary term such as *"Sun", "House",* or *"Car".* The y-axis of graph 400 shows the probability of the respective vocabulary term being the next word. Note that, using the conventional method, the highest probability of being the next word pertain to rather unrelated concepts such as *"House"* and *"Car".* This may be due to the use of the single-label binary cross-entropy loss function which considers merely one class 410, in this case *"House"* during the training and inference process. Assuming the correct next word would be *"House",* however, the model predicts the next word to be *"car".* Note that this is not shown in Figure 4 but would be conceivable using conventional methods. Not only is this a wrong prediction but this wrong prediction may have negative consequences for future predictions.

Figure 5 provides an overview of the memory usage during the training phase and emphasizes the memory advantage provided by the proposed invention. More specifically, two memory usage graphs 500, 510 are shown. The upper graph 500 focuses on the memory usage of conventional methods with microbatch size 2 and the lower graph 510 focuses on the memory usage of the proposed invention with microbatch size 4. The difference between a microbatch size of 2 and a microbatch size of 4 lies in the number of samples processed before updating the model parameters. Accordingly, when interpreting the memory usage graphs, note that the conventional methods (i.e., upper graph 500) is processing merely half of the samples that are processed by the method of the present invention (i.e., lower graph 501). The conventional method required a reduction in samples to be processed (i.e., batch size) to fit the reserved memory constraint.

The y-axis of each graph shows the memory usage in megabytes (MB) and ranges from 0 MB to 80,000 MB. For reference, 80,000 MB are equivalent to 80 gigabytes (GB). The x-axis of each graph shows the time in milliseconds (ms). The x-axis of the upper graph 500 ranges from 0 to 26,000 ms and the x-axis of the lower graph 510 starts at around 40,000 ms and is shown until around 80,000 ms. For reference, 60,000 ms are equivalent to 1 min. Note that due to the scaling difference, a direct comparison is not possible. However, the general memory advantage of the proposed invention still applies. Both memory usage graphs 500, 510 show two lines, a reserved memory line 520 and an allocated memory line 530. The reserved memory lines 520 indicate the total memory that is reserved at a specific point in time during the training process. The allocated memory lines 530 indicate the actual memory that is allocated during the training process.

The allocated memory line 530 of the upper graph 500 shows a reoccurring jagged pattern that has troughs 540 at around 20,000 MB and peaks 550 at around 47,000 MB from around 14,000 ms to around 18,000 ms. This pattern is shifted upwards around 10,000 ms for the remaining 10,000 ms with troughs 540a at around 30,000 MB and peaks 550a at around 57,000 MB. In contrast, the allocated memory line 530 of the lower graph 510 merely shows six irregularly occurring spikes in allocated memory usage that start at around 12,000 MB to 20,000 MB and peak at around 40,000 MB to 55,000 MB. Notably, between 50,000 ms and 70,000 ms, the allocated memory of the lower graph 510 remains constant 560 at around 20,000 ms. Moreover, the difference in peak memory usage 570 can be seen on the top-left hand corner of each of the two graphs 500, 510. While the conventional method has a peak memory usage of 55,605 MB, the proposed invention has a peak memory usage of 54,668 MB.

Accordingly, Figure 5 for demonstrates the potential improvement with regards to memory usage and more generally computational resources that is provided by the proposed invention. More specifically, the derived language agnostic representations may have the advantage of requiring less memory while still achieving a similar or even better result than conventional methods. This may be particularly advantageous with regards to large language models since those models are commonly trained for an extremely long period of time which is usually measured in weeks or even months. The derived language agnostic representations may have the advantage of requiring less memory which may significantly reduce the overall training time of such large language models. It is to note that the same advantage of saving memory and computational resources may apply during inference. However, since inference is usually less time consuming, the advantage may be more relevant during the training phase of the model.

Figure 6 shows performance difference between conventional methods and the method according to the present invention. It can be seen that the performance of the model no longer degenerates when it is confronted with a language other than the language the tokenizer was constructed with. For example, all methods perform well in English language. However, most conventional methods experience a significant drop in performance when tested on other languages such as German or Russian. This may be because those other languages are not accurately sampled in the reference corpus during training of the tokenizer. It is also shown that conventional methods large proportions of duplicate token. Those tokens may only differ in their capitalization or leading whitespace. In contrast, the present invention avoids such duplication of token and thus may have the advantage of saving memory space and computational resources as described in more detail with regards to Figure 5. More specifically, the size of the embedding layers may be reduced by more than 80% compared to a 64k unigram baseline.

The figures may not be drawn to scale, and the relative size, proportions, and depiction of elements in the figures may be exaggerated for the purpose of clarity, illustration, and convenience. The figures do not limit the scope of the claims but merely support the understanding of the invention.

Embodiments of the present disclosure may be realized in any of various forms, e.g., in software. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

### List of reference signs

- 100: embedding process (present invention)
- 110, 310: text information
- 120: words
- 130, 330: token / descriptor
- 335: token identification number
- 140-144, 340: embeddings
- 150: language agnostic representation
- 200: decoding graph (present invention)
- 210: single-labelloss function
- 300: embedding process (conventional)
- 400: decoding graph (conventional method)
- 410: single-label binary loss function
- 500: upper memory usage graph (conventional method)
- 510: lower memory usage graph (present invention)
- 520: reserved memory line
- 530: allocated memory line
- 540, 540a: troughs
- 550, 550a: peaks
- 560: constant memory usage
- 570: peak memory usage

## Claims

1. A computer-implemented method for deriving a language agnostic representation for each word of a text, the method comprising:
splitting the text into a plurality of words;
tokenizing the plurality of words to obtain a plurality of tokens;
calculating a token identification number for each token;
hashing each token identification number to obtain a plurality of embedded tokens identification numbers;
aggregating one or more embedded token identification numbers to obtain the language agnostic representation for each word.

2. The method of the preceding claim, wherein the tokenizing step comprises:
deriving, for each of the plurality of words, one or more n-grams;
wherein each n-gram corresponds to a token of the plurality of tokens.

3. The method of the preceding claim, wherein each n-gram is a sequence of n bytes,
wherein preferably each byte corresponds to a symbol that is present in the text information, wherein most preferably the sequence corresponds to n consecutive symbols that are present in the text information.

4. The method of the preceding claims, wherein the n is equal to an integer between 5 and 1, preferably between 4 and 2, most preferably three.

5. The method of any one of the preceding claims, wherein the splitting step is performed at one or more of:
a whitespace;
a digit;
a special character.

6. The method of any one of the preceding claims, wherein the hashing step comprises:
hashing each token identification number using a hashing algorithm; or
training a machine learning model; and
hashing, using the trained machine learning model, each token identification number.

7. The method of any one of the preceding claims, wherein the one or more embedded token identification numbers correspond to the same word of the plurality of words.

8. The method of any one of the preceding claims, wherein the aggregating step comprises:
aggregating one or more embedded token identification numbers to obtain one or more aggregated embedded token identification numbers; and
aggregating the one or more aggregated embedded token identification numbers to obtain the language agnostic representation for each word.

9. The method of any one of the preceding claims, wherein the aggregating step comprises:
aggregating the one or more embedded token identification numbers by calculating the mean of the one or more embedded token identification numbers; and/or
aggregating the one or more embedded token identification numbers by calculating the sum of the one or more embedded token identification numbers.

10. A computer-implemented method for training a machine learning model, the method comprising:
deriving a language agnostic representation of text information according to the method of any one of the preceding claims; and
training the machine learning model based on the language agnostic representation.

11. The method of the preceding claim, wherein the machine learning model is trained using a multi-label binary cross entropy loss function.

12. The method of any one of claims 10 or 11, wherein the machine learning model is a neural network, preferably based on an encoder-decoder architecture, most preferably based on a transformer architecture.

13. A computer-implemented method for generating text based on a prefix, the method comprising:
inputting the prefix into a machine learning model trained according to the method of any one of claims 10 to 12;
generating, using the trained machine learning model, text.

14. A device or system comprising means to implement the method according to any one of claims 1 to 9 or claims 10 to 12 or claim 13.

15. A computer program comprising instructions which, when the program is executed by a computer, cause the computer to carry out the method of any of claims 1 to 9 or claims 10 to 12 or claim 13.
